Europäisches Patentamt

European Patent Office

Office européen des brevets

(19)

(11) EP 0 825 556 B1

(12) FASCICULE DE BREVET EUROPEEN

(45) Date de publication et mention
de la délivrance du brevet:
**01.12.1999 Bulletin 1999/48**

(51) Int Cl.⁶: **G06T 9/00**

(21) Numéro de dépôt: **97401924.2**

(22) Date de dépôt: **13.08.1997**

(54) **Codeur par transformation de blocs pour segments d'image de formes arbitraires**

Blocktransformationskodierer für willkürlich geformte Bildsegmente

Block transform coder for arbitrarily shaped image segments

(84) Etats contractants désignés:
**DE FR GB**

(30) Priorité: **14.08.1996 FR 9610227**

(43) Date de publication de la demande:
**25.02.1998 Bulletin 1998/09**

(73) Titulaire: **FRANCE TELECOM**
**75015 Paris (FR)**

(72) Inventeurs:
• **Donescu, Iona**
**94230 Cachan (FR)**
• **Avaro, Olivier**
**94230 Cachan (FR)**
• **Roux, Christian**
**94230 Cachan (FR)**

(74) Mandataire: **Schmit, Christian Norbert Marie**
**Cabinet BALLOT-SCHMIT,**
**16, avenue du Pont Royal**
**94230 Cachan (FR)**

(56) Documents cités:
**EP-A- 0 649 258          US-A- 5 295 201**

• **BI M ET AL: "Coefficient grouping method for**
**shape-adaptive DCT" ELECTRONICS LETTERS,**
**1 FEB. 1996, IEE, UK, vol. 32, no. 3, ISSN**
**0013-5194, pages 201-202, XP000554939**
• **SIKORA T: "Low complexity shape-adaptive**
**DCT for coding of arbitrarily shaped image**
**segments" SIGNAL PROCESSING: IMAGE**
**COMMUNICATION, NOV. 1995, ELSEVIER,**
**NETHERLANDS, vol. 7, no. 4-6, ISSN 0923-5965,**
**pages 381-395, XP000538019**

## Description

La présente invention concerne un procédé de transformation linéaire du signal image sur des supports de forme arbitraire.

On entend ici par signal image, un signal numérique bi- (ou tri-)dimensionnel. On entend par support, la géométrie de la région de l'image définissant l'objet auquel on s'intéresse. L'invention concerne plus particulièrement un procédé de transformation linéaire d'un signal image sur des supports de forme et de taille arbitraires en vue de codage.

L'invention s'applique au codage d'image par transformation linéaire.

Le procédé présenté s'inscrit dans le cadre du développement d'une nouvelle famille de codeurs d'images, les codeurs dits orientés "objets". Il s'agit d'une nouvelle approche de codage, qui consiste à représenter la scène audiovisuelle comme un ensemble d'objets en mouvement. Ceci ouvre la voie vers la mise en oeuvre de nouvelles fonctionnalités liées à l'image numérique.

Les systèmes de codage d'images à réduction de débit numérique normalisés (par exemple la recommandation H261 du CCITT pour le codage de la vidéo à P fois 64 Kbits/s) sont basés sur un découpage de l'image numérique en ensemble de blocs carrés (de taille 8x8 en général) qui subissent les opérations de codage. Cette formulation est rigide et ne tient pas compte du contenu de chaque bloc, par exemple de l'existence de contour ou des fortes variations de luminance à l'intérieur d'un bloc.

Le codage du signal image comporte en général une première phase de transformation linéaire orthogonale, qui a pour but de concentrer l'énergie du signal et de décorréler ses composantes.

La transformation linéaire utilisée en général est la transformation en cosinus discrète, dénommée ci-après DCT (Discrete Cosine Transform), qui peut être mise en oeuvre par des algorithmes simples et efficaces et permet par conséquent des applications temps réel. La DCT a été retenue car elle permet d'obtenir une décorrélation proche du maximum lorsque le signal peut être représenté par un processus de Markov du premier ordre séparable fortement corrélé, i.e. dont le coefficient de corrélation est proche de 1.

Il est cependant très avantageux pour de nombreuses applications de représenter l'image en termes d'objets, qui sont à trouver, à décrire et à transmettre.

Dans ce contexte, un objet se définit comme une région de l'image, de forme et taille arbitraires, qui peut soit représenter un objet physique, soit une zone d'intérêt prédéfinie, soit simplement une région qui présente des propriétés d'homogénéité au sens d'un ou plusieurs critères.

Un objet peut être décrit par sa forme et sa texture.

Plusieurs auteurs se sont récemment penchés sur la recherche de méthodes appropriées pour le codage des formes d'une part, et de la texture des objets d'autre part.

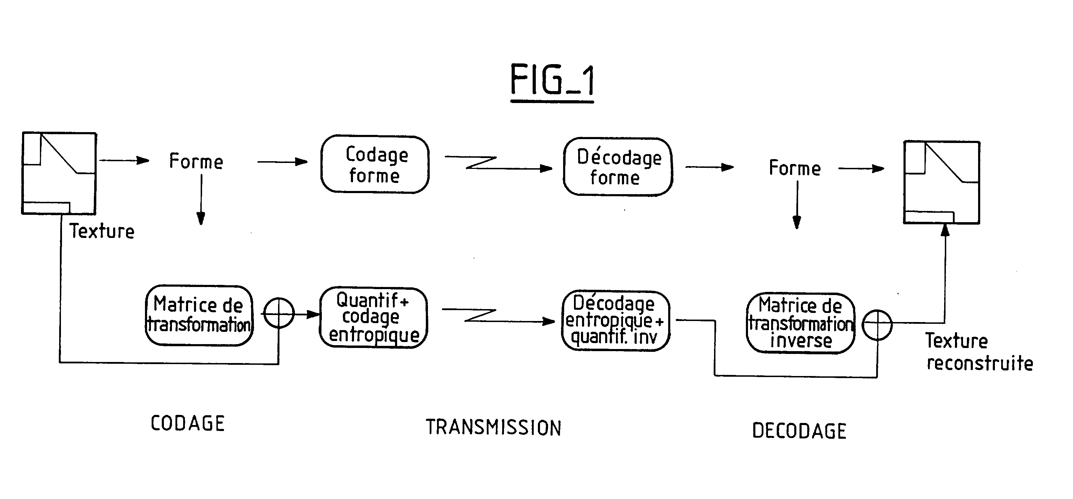

On pourra se reporter au schéma de la figure 1 qui illustre les différentes étapes mises en oeuvre par ces méthodes. Le traitement de la forme comporte un codage, la transmission, le décodage à la réception et la représentation.

Le traitement de la texture comporte une transformation orthogonale, une quantification et un codage entropique, la transmission, le décodage entropique avec quantification inverse, la transformation inverse pour reconstituer la texture.

Les méthodes de transformation linéaire sur des blocs carrés de taille fixée à l'avance ne s'appliquent pas directement aux objets de support arbitraire pour le codage de la texture.

Ainsi, la présente invention concerne un nouveau procédé de transformation linéaire en vue du codage de la texture sur des objets qui ont des supports de forme arbitraire.

Des études récentes sur le sujet on été publiées par plusieurs auteurs. Les méthodes proposées se divisent en deux classes : les méthodes adaptatives et les méthodes d'extrapolation.

- Les méthodes adaptatives consistent à adapter des transformations linéaires orthogonales à la géométrie du support.

  On peut citer l'adaptation de la transformation de Karhunen-Loeve au support de S.F. CHANG AND D.G. MESSERSCHMIDT, Transform Coding of Arbitrarily Shaped Image Segments, Proceedings of ACM Multimedia, Anaheim, CA, USA, pp 83-90, Aug. 1993 et le procédé de génération de bases orthogonales au support proposé par GILGE, T. ENGELHARDT AND R. MEHLAN, Coding of Arbitrarily Shaped Image Segments Based on a Generalized Orthogonal Tansform, Signal Processing : Image Communication 1, pp 153-180, 1989.

  Ce procédé préconise l'orthonormalisation de n'importe quelle famille de vecteurs, libre sur le support, par une procédure algébrique dite de Gram-Schmidt. Cette procédure est néanmoins très lourde du point de vue calculatoire, et donc non adaptée à des applications "temps réel". Les travaux de GILGE ont donné lieu à plusieurs études sur la génération rapide de bases orthogonales au support ([M. CERMELLI, F LAVAGETTO AND M. PAMPOLINI, A fast Algorithm for Region-Oriented Texture Coding, ICASSP 1994, pp 285-288], [W. PHILIPS, A Fast Algorithm for the Generation of Orthogonal Base Functions on an Arbitrarily Shaped Region, Proceeding of ICASSP 1992, vol. 3, pp 421-424, Mar. 1992, San Fransisco], [W. PHILIPS AND C. CHRISTOPOULOS, Fast Segmented Image Coding using Weakly Separable Bases, Proceedings of ICASSP 1194, vol. 5, pp 345-348]).

- Les méthodes d'extrapolation consistent à étendre le signal à un support régulier, qui est en général le rectangle circonscrit au support à coder.

Ces méthodes permettent d'appliquer des transformations linéaires existantes sur des supports réguliers (rectangulaires ou carrés) et donc rapides et faciles à mettre en oeuvre. Dans cette catégorie de méthodes la plus connue est la méthode itérative basée sur des projections sur des ensembles convexes proposée dans H.H. CHEN, M.R. CINVALAR AND B.G. HASKELL, A Block Transform Coder for Arbitrarily Shaped Image Segments, International Conference on Image Processing (ICIP), 1994, pp 85-89.

D'autres méthodes plus simples ont été testées, comme le "zero-padding" (remplissage de la zone par des 0), le "mirroring" (réflexion du signal sur les bords de l'objet) ou la dilatation morphologique ([s.F. CHANG AND D. G. MESSERSCHMIDT, Transform Coding of Arbitrarily Shaped Image Segments, Proceedings of ACM Multimedia, Anaheim, CA, USA, pp 83-90, Aug. 1993], [H.H. CHEN, M.R. CHINVALAR AND B.G. HASKELL, A Block Transform Coder for Arbitrarily Shaped Image Segments, International Conference on Image Processing (ICIP), 1994, pp 85-89]).

Les deux classes de méthodes rappelées ci-dessus présentent des avantages et des inconvénients qui leur sont propres.

- Les méthodes adaptatives présentent l'avantage d'une reconstruction parfaite avec autant de coefficients que de points du support quand aucune quantification n'est effectuée. Elles permettent de prolonger la théorie du codage par transformation linéaire aux supports de forme arbitraire. Par contre, elles sont en général lourdes du point de vue complexité/temps de calcul.
- Les méthodes d'extrapolation au contraire offrent une mise en oeuvre facile et adaptée à l'existant, mais risquent d'apporter des artefacts liés à l'introduction de nouvelles fréquences dans le signal.

Pour des applications pratiques, il serait donc intéressant de combiner les avantages des deux catégories de méthodes citées ci-dessus, c'est-à-dire des transformations linéaires rapides et adaptées aux supports. Les travaux dans D1 (M. BI, W.K. CHAM AND Z.H. ZHENG, Discrete Cosine Transform on Irregular Shape for Image Coding, IEEE Tencon 93 Proceedins, Beijing, pp 402-405) et D2 (T. SIKORA AND B. MAKAI, Shape Adaptive DCT for Generic Coding of Video, IEEE Transactions on Circuits and Systems for Video Technology, vol. 5, N°1, pp 59-62, Feb. 1995) proposent l'application d'une transformation orthogonale classique DCT séparément sur les lignes et les colonnes du support, par analogie avec la séparabilité lignes/colonnes des transformations orthogonales classiques. Cette séparabilité permet d'appliquer successivement deux transformations mono-directionnelles.

Dans D1 les auteurs proposent une phase d'analyse des corrélations entre les coefficients issus de la première transformation, ce qui rend la méthode assez complexe. Dans D2 le regroupement et donc l'itération de la transformation est fait de manière automatique : la méthode proposée par D2 (Shape Adapted DCT - SADCT) tend vers la combinaison des avantages rapidité de mise en oeuvre. Cependant, la SADCT ne présente pas de flexibilité, et en particulier ne permet pas de s'adapter précisément au support ou propriétés du signal sur le support.

L'invention a pour objet un procédé qui combine les avantages des deux classes de méthodes présentées ci-dessus, qui présente donc une adaptivité au support et une rapidité de calcul et une simplicité à la mise en oeuvre.

Ainsi, la mise en oeuvre du procédé proposé est peu complexe et son action est efficace. Le procédé peut être implanté avec les méthodes existantes car il utilise des transformations connues et déjà optimisées.

Le procédé s'adapte au support et permet de prendre en compte la corrélation bidimensionnelle du signal sur le support. En termes de gain théorique le procédé proposé présente de meilleurs résultats que toutes les autres transformations indépendantes du signal, testées sous certaines hypothèses usuelles pour la fonction d'autocorrélation du signal, qui correspondent au mode intra. Du point de vue pratique, ce procédé apporte un gain par rapport aux méthodes qui sont aussi simples et qui ont été testées. Ses résultats sont proches des résultats des méthodes beaucoup plus complexes.

L'invention propose un procédé de transformation linéaire du signal image sur un support de forme arbitraire par décomposition en sous-supports réguliers suivie de l'application d'une transformation linéaire orthogonale sur chaque support et enfin de l'itération de la transformation dans l'espace transformé.

La phase d'extraction des objets est supposée faite et le procédé s'applique après cette phase.

L'invention a donc plus particulièrement pour objet un procédé de transformation linéaire du signal image sur un support de forme arbitraire, principalement caractérisé en ce qu'il comporte les étapes suivantes :

- décomposition du support en sous-supports de formes régulières (rectangulaires, carrés ou linéiques),
- application d'une transformation linéaire orthogonale sur chaque sous-support,

- regroupement des coefficients issus de la première transformation en classes de coefficients selon un critère prédéterminé,
- itération de la transformation sur les classes de coefficients.

En effet, dans le cas où il reste une forte corrélation entre les coefficients après l'étape de transformation initiale, la transformation orthogonale linéaire est itérée sur des ensembles de coefficients bien choisis.

L'utilisation d'une transformation linéaire orthogonale classique sur chacun des sous-supports (on peut par exemple utiliser la DCT) est avantageuse. Cette décomposition permet de tirer profit de la capacité de décorrélation et de concentration de l'énergie d'une transformation telle que la DCT dans le cadre des hypothèses classiques de codage sur des rectangles. Ces hypothèses consistent à modéliser le signal par un processus de Markov séparable du premier ordre et fortement corrélé dans les directions verticale et horizontale. Cette modélisation est a fortiori valide dans le cas où les zones à coder sont issues d'une segmentation sur le critère de l'homogénéité en niveaux de gris.

Selon une autre caractéristique, l'étape de regroupement comporte une étape intermédiaire consistant à passer d'un espace à deux dimensions à des vecteurs de coefficients à une dimension.

Selon un mode réalisation, l'étape intermédiaire est réalisée en opérant une lecture des coefficients en zigzag.

Selon une autre caractéristique, l'étape de regroupement consiste à regrouper les coefficients représentant les composants continues correspondant à chaque sous-support en un vecteur de taille égale au nombre de sous-supports.

Selon un autre mode de réalisation l'étape de regroupement consiste à regrouper les coefficients de même rang défini par la lecture en zigzag.

Selon un autre mode de réalisation, l'étape de regroupement consiste à regrouper les coefficients qui sont proches en distance, une distance dans l'espace fréquentiel ayant été prédéfinie.

Selon une autre caractéristique, le procédé consiste en outre à effectuer une réorganisation finale des coefficients selon un ordre choisi.

Selon une autre caractéristique, l'ordre choisi est celui de leur rang après transformation ce qui est avantageux dans le cas du codage à longueur variable par analogie avec la lecture des coefficients en zigzag dans la recommandation H261 du CCITT.

Selon une autre caractéristique, la transformation linéaire orthogonale appliquée aux sous-supports est une transformation en cosinus discrète.

De préférence, on opère la même transformation linéaire lors de l'itération que lors du traitement des sous-supports.

Selon un mode de réalisation, l'itération de la transformation est effectuée avec une matrice de transformation normalisée.

Ainsi, selon l'invention, le problème du codage par transformation des supports de forme arbitraire est posé de façon nouvelle. Bien que la formulation s'appuie sur des outils connus, elle se distingue des autres méthodes connues à ce jour et qui ont été présentées dans la présente demande par une approche nouvelle qui se traduit par un enchaînement des diverses étapes contribuant à résoudre le problème avec les avantages indiqués.

De plus, l'étape de regroupement est originale par rapport à tout traitement par blocs des variables qui a été proposé jusqu'à présent. Cette étape permet d'exploiter la corrélation restante sur le support et donc d'atteindre une meilleure décorrélation et une meilleure concentration de l'énergie pour chaque support. Ce type de regroupement de coefficients issus d'une première étape de DCT bidimensionnelle (2D) sur des supports rectangulaires n'a pas été utilisée jusqu'à présent. Cette opération n'est en effet pas évidente dans la mesure où les rectangles de départ ont des tailles variables et n'est pas naturelle a priori. D'ailleurs, une normalisation peut s'avérer nécessaire. De plus on montre qu'on améliore les résultats par rapport à des transformations indépendantes sur des blocs de taille variable.

L'invention sera réalisée selon la revendication 1 ci-jointe.

D'autres particularités et avantages de l'invention apparaîtront à la lecture de la description qui est faite à titre d'exemple indicatif et nullement limitatif et en regard des dessins sur lesquels :

- la figure 1, représente un schéma de principe général du traitement d'un objet de forme arbitraire, [où la détection de l'objet n'est pas incluse,]

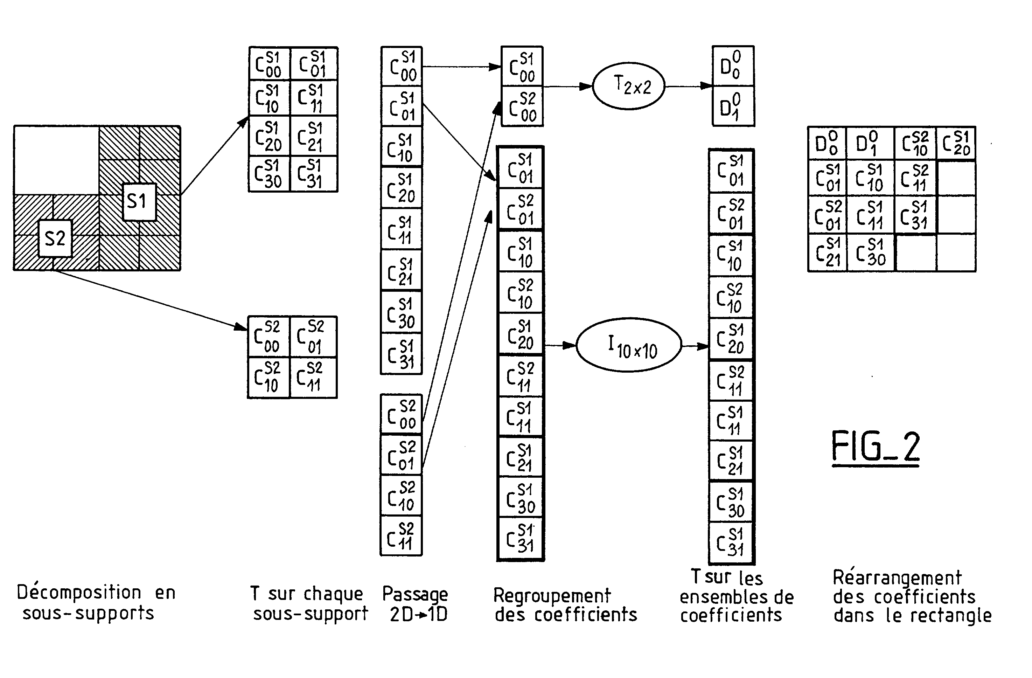

- la figure 2 représente un schéma complet du procédé de codage proposé, incluant un exemple de mise en oeuvre possible,
- la figure 3, représente un exemple de pavage d'un support donné par application d'un algorithme de recherche des rectangles de surface maximale inscrits dans le support,
- la figure 4, représente un exemple de passage d'un support rectangulaire 2D à support 1D, en suivant l'ordre d'une lecture en zigzag, adaptée à la lecture des coefficients dans l'espace transformé,
- la figure 5, représente les deux types de chemins classiques pour la lecture en zigzag,
- les figures 6A, 6B, 6C sont des des illustrations schématiques de trois algorithmes de regroupement des coefficients en vue de l'itération de la transformation. L'exemple est donné sur 2 sous-supports seulement, mais se généralise facilement à un nombre quelconque de sous-supports,

- la figure 7, représente le principe de lecture finale des coefficients dans l'espace transformé, selon leur rang après transformation,
- la figure 8, montre un exemple particulier où l'itération de la transformation est faite seulement sur les composantes continues,
- les figures 9A, 9B représentent un exemple concret d'application du procédé en vue de codage des supports dans le cas d'une représentation d'une image visiophonique en termes de fond/personnage.

Les étapes de décomposition, transformation, regroupement et itération concernent la transformation linéaire proprement dite alors que l'étape de réorganisation finale concerne l'exploitation de la concentration de l'énergie obtenue par transformation.

Cette étape a pour but de permettre un codage efficace basé sur l'entropie de l'information à transmettre. L'ensemble des coefficients obtenu après cette transformation peut être quantifié par quantification scalaire comme dans le cas du traitement du signal par blocs. La quantification peut être faite de manière uniforme sur l'ensemble des coefficients. Elle permet la modulation du résultat en termes de débit/distorsion : plus on augmente le pas de quantification, plus on augmente la distorsion et on diminue le débit.

En pratique, la phase de quantification sera réalisée dans le cas de tout système de codage.

Le procédé proposé permet de prendre en compte les corrélations bidimensionnelles du signal à coder. Dans le cas régulier, le procédé peut se ramener à la DCT simple (si on retient la DCT comme base de transformation initiale), qui a été retenue jusqu'à présent dans toutes les normes de codage d'image récentes.

Le procédé permet de combiner avantageusement rapidité de calcul et adaptabilité au support. En effet, la transformation par DCT sur des supports réguliers est rapide et efficace. Le procédé proposé est facilement incorporable dans les systèmes de codage existants.

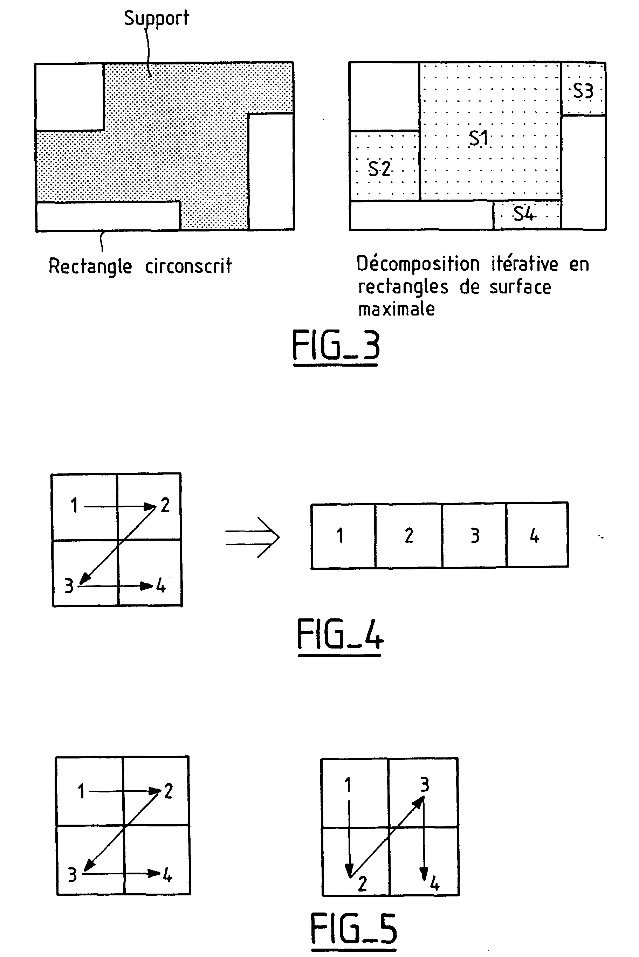

La décomposition en sous-support réguliers permet de prendre en compte à la fois la géométrie du support et les propriétés du signal à coder. Un algorithme de décomposition simple représente une faible surcharge de calcul. Un exemple de décomposition possible est la recherche récursive de sous-supports rectangulaires de surface maximale inscrits dans le support tel que illustré par la figure 3. Un autre exemple de décomposition possible est la décomposition en sous-supports linéiques (par exemple en colonnes).

Selon un autre aspect de l'invention, l'itération de la transformation est opérée sur un ensemble de coefficients choisis afin de concentrer l'énergie du signal sur le support. Cette étape est également flexible et modulable en fonction de la géométrie du support et des hypothèses sur le signal. Il est en particulier nécessaire d'itérer la transformation sur l'ensemble des composantes continues. Chaque composante continue représente l'énergie du signal à la fréquence zéro sur chaque sous-support. Ces composantes continues sont corrélées, et donc l'itération de la transformation permettra une meilleure décorrélation et une meilleure concentration de l'énergie.

L'ordre de lecture des coefficients dans l'espace transformé final est choisi pour exploiter au mieux (statistiquement) l'étape de transformation linéaire en vue d'un codage efficace. La transformation linéaire a pour but de concentrer l'énergie et de décorréler les coefficients. La lecture des coefficients en zigzag sur des blocs réguliers, comme cela est représenté sur la figure 4, est justifiée par le fait qu'on suppose que le signal possède plus d'énergie dans les basses fréquences, dans les deux directions horizontale et verticale. La lecture en zigzag correspond donc à une lecture des coefficients par ordre d'importance.

Dans le cas de la transformation linéaire proposée ci-dessus pour des supports arbitraires, on exploite également la concentration de l'énergie.

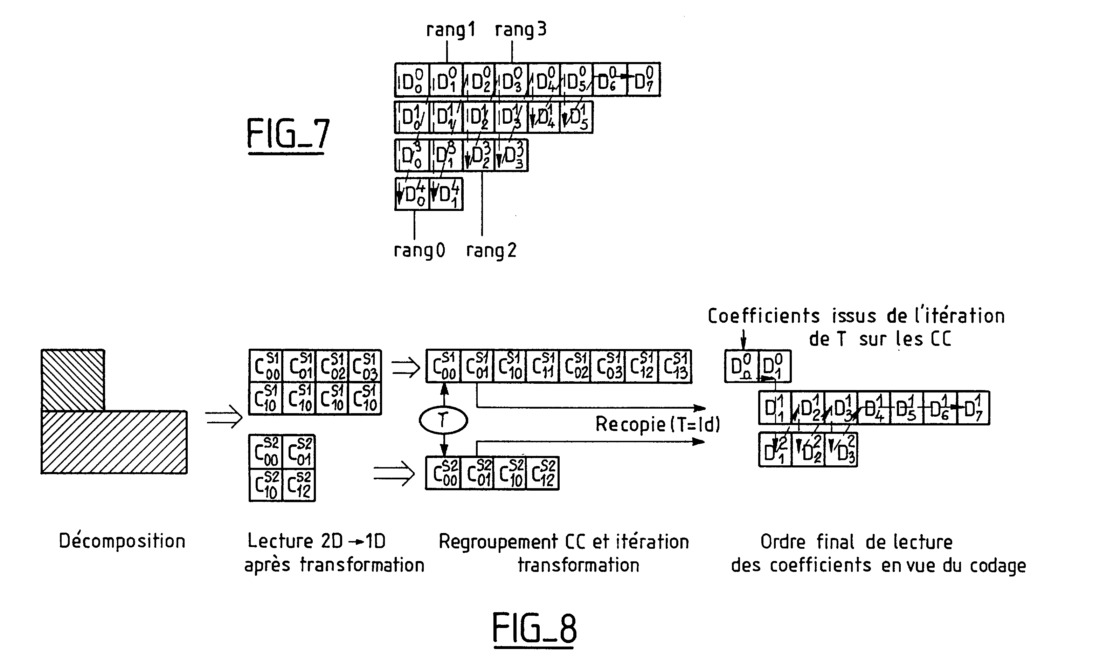

L'ordre de lecture des coefficients est donc adapté à leur importance selon la transformation effectuée, comme cela est illustré par la figure 7.

Dans l'exemple donné, le procédé présenté se réfère uniquement au codage de l'intérieur de l'objet, les contours étant supposés connus du décodeur, donc codés et transmis auparavant par toute méthode appropriée et connue. On transmet au minimum l'ensemble des coefficients quantifiés, quelque soit la mise en oeuvre choisie tel que cela est illustré par la figure 1. Pour plus de flexibilité, on peut éventuellement transmettre aussi la méthode de décomposition, la transformation de base appliquée ou l'ordre de lecture des coefficients.

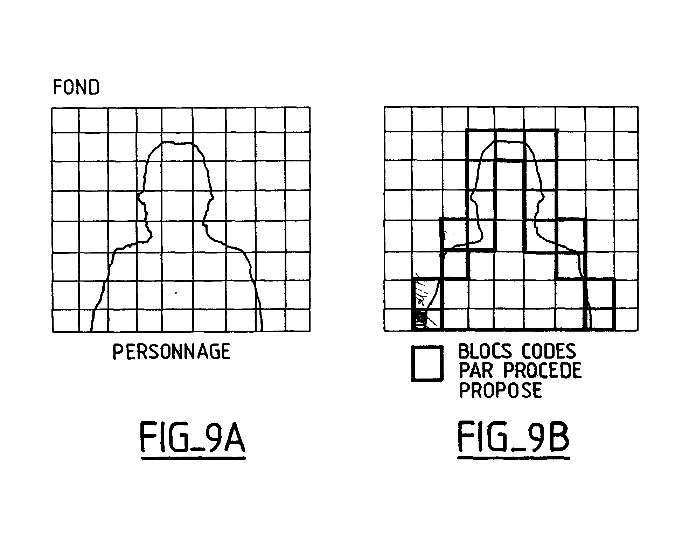

Un exemple d'application du procédé est le codage d'une séquence visiophonique en termes de fond/personnage tel que illustré par la figure 9. Les contours du personnage sont détectés par toute méthode appropriée connue et le fond est supposé fixe.

On va par conséquent coder seulement le personnage. On superpose une grille rectangulaire formée par exemple de blocs 8x8 sur l'image à coder de manière à restreindre la taille des supports possibles.

Seuls les blocs contenant à la fois une partie du fond et une partie du personnage sont alors à coder par une méthode adaptée. L'avantage d'un tel schéma est qu'il suffit alors d'avoir calculé, au codeur comme au décodeur, les matrices de transformation monodimensionnelles de taille P, pour P variant de 2 à 8. Le surplus de mémoire nécessaire au codeur comme au décodeur est alors très faible.

Le procédé de transformation du signal image sur les supports de forme arbitraire pour le codage de la texture relatif à l'invention, peut être décrit de manière théorique comme une transformation linéaire, qui peut être orthogonale ou non dont la matrice de transformation est la composition (multiplication) de plusieurs matrices de transformation, chacune correspondant à une étape du procédé de codage.

La première étape du procédé est la décomposition du support donné en un ensemble de sous-supports réguliers. il s'agit d'un pavage bidimensionnel.

Selon l'exemple, le pavage est réalisé par la recherche récursive de rectangles de surface (aire) maximale inscrits dans le support tel que représenté sur la figure 3.

Selon un autre exemple, le passage est obtenu en découpant le support en un ensemble de colonnes/sous-supports linéiques.

Si l'on note X le vecteur 1D obtenu par lecture des points du support dans l'ordre du balayage vidéo, cette étape revient à permuter les composantes du vecteur X, donc à multiplier ce vecteur par une matrice de permutation $P_1$. On obtient donc :

$$X_1 = P_1 X$$

La matrice $P_1$ dépend du support et de la méthode de décomposition appliquée.

Le vecteur $X_1$ contient alors des points ordonnés selon les sous-supports réguliers.

En notant $D_{MN}$ la matrice de transformation orthonormale (par exemple la DCT) sur un rectangle de M lignes et N colonnes, l'étape 2 du procédé aboutit à un nouveau vecteur $X_2$ :

$$X_2 = \begin{pmatrix} a_1 D_{M_1, N_1} & & 0 \\ & a_i D_{M_i, N_i} & \\ 0 & & a_P D_{M_P, N_P} \end{pmatrix} X_1 = A X_1$$

où $M_i$ et $N_i$ sont respectivement le nombre de lignes et de colonnes du ième sous-support, et les $a_i$ sont des constantes de normalisation prédéterminées. [A] est une matrice orthogonale par blocs.

L'étape 3 de réarrangement des coefficients après cette première transformation 3 revient également à une permutation des composantes de $X_2$, donc à la multiplication par une matrice de permutation $P_2$, qui dépend de la géométrie du support et

$$X_3 = P_1 X_2.$$

Cette étape est importante. Elle comporte une phase intermédiaire qui est le passage d'un espace à deux dimensions à une dimension représenté par les vecteurs de coefficients (1 D) sur lesquels la transformation sera itérée tel que représenté par la figure 4.

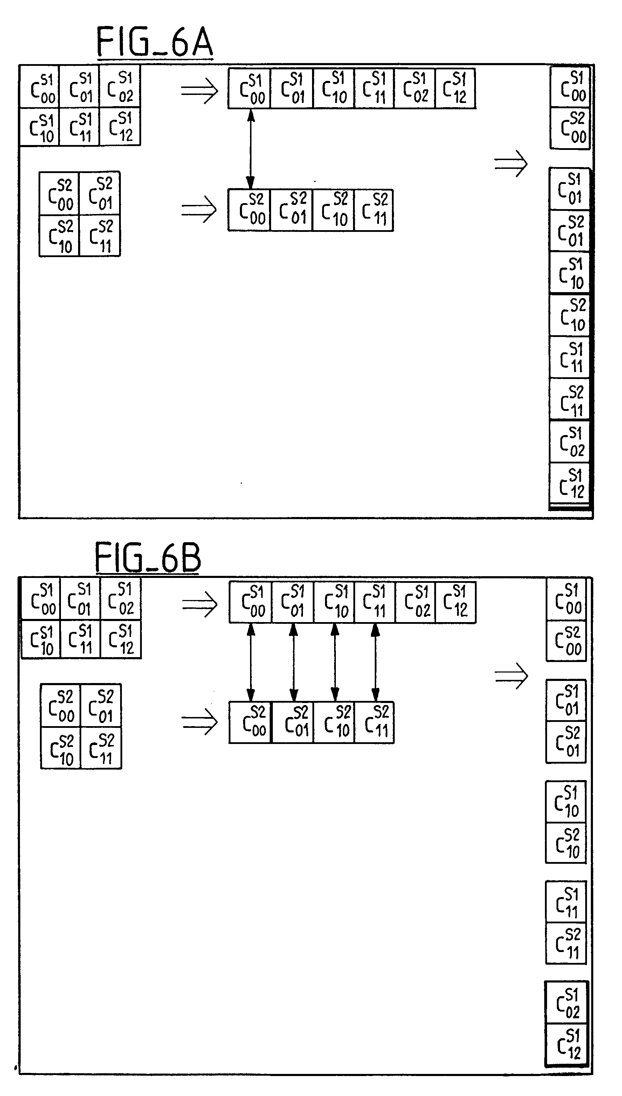

La façon la plus simple et directe de passer des coefficients sur un sous-support donné (donc passage de 2 D à 1 D) est de prendre la lecture des coefficients en zigzag, comme le montre la figure 4. Le choix du sens du zigzag (figure 5) est indifférent.

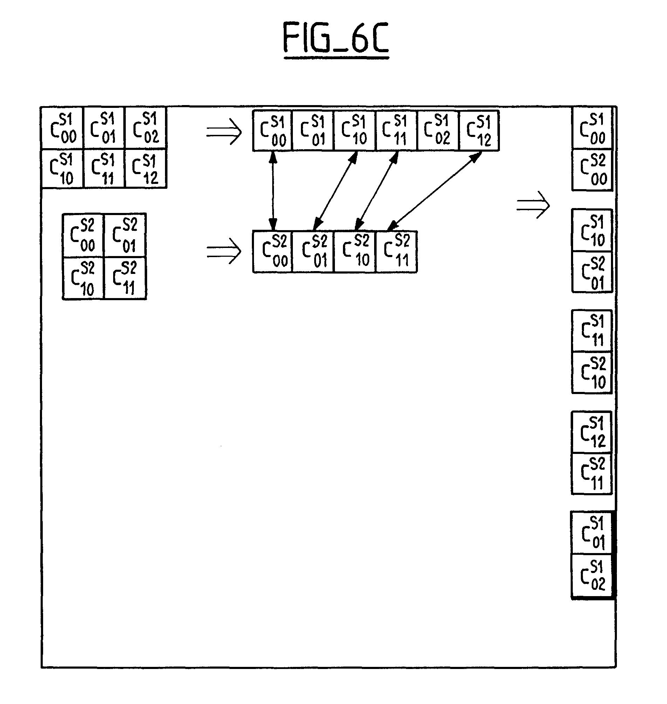

Selon une autre caractéristique de l'invention, on propose plusieurs façons de regrouper les coefficients en vecteurs de dimension un, en vue de l'itération de la transformation, comme le montre la figure 6.

On propose 3 types de regroupements différents :

- le premier regroupement est le regroupement des composantes continues correspondant à chaque sous-support en un vecteur de taille égale au nombre de sous-supports tel que illustré par la figure 6,
- une autre possibilité est de regrouper les coefficients des mêmes rangs dans le zigzag préalable, comme le montre la figure 6B. On itère ensuite la transformation sur des vecteurs contenant tous les coefficients de rang donné issus de chaque sous-support.
- enfin une troisième réalisation possible consiste à regrouper les ensembles de coefficients et à définir une distance dans l'espace fréquentiel, et à regrouper les coefficients qui sont proches au sens de cette distance.

Enfin l'étape suivante est une étape de transformation sur les sous-ensembles de coefficients regroupés, qui s'écrit, par analogique avec l'étape 2 :

$$Y = \begin{pmatrix} b_1 T_{M_1} & & & 0 \\ & b_i T_{M_i} & & \\ & & & \\ 0 & & & b_P T_{M_P} \end{pmatrix} X_3 = B X_3$$

où $T_M$ représente soit la matrice d'une transformation linéaire (MxM), correspondant à la même phase qu'à l'étape 2 (la DCT par exemple) pour un vecteur 1D de taille M, soit la transformation identité.

L'étape de lecture du type zigzag des coefficients n'est pas incluse dans la transformation.

La transformation proposée s'écrit donc comme une transformation linéaire dont on peut calculer la matrice explicitement pour chaque support :

$$Y = TX$$

$$T = BP_2AP_1$$

les matrices A et B sont orthogonales par blocs et les matrices $P_i$ sont des matrices de permutation. Ceci rend la matrice finale T inversible sans aucun calcul algébrique.

Il est important de noter que cette formulation théorique n'est utile que pour l'étude et la validation théorique de la méthode proposée. La matrice de la transformation peut être calculée dynamiquement au codeur comme au décodeur à partir de la seule connaissance de la forme de l'objet. La matrice de la transformation n'est pas à stocker ou à transmettre. On peut se reporter pour cela à la figure 1.

La matrice T est orthonormale dans le cas particulier où tous les coefficients de normalisation $a_i$ et $b_i$ sont égaux à 1.

Afin d'améliorer les performances de l'itération de la transformation, on peut appliquer dans la première étape non pas des matrices de DCT standard (i.e. orthonormales), mais des matrices de transformation normalisées. Ceci permet d'augmenter la corrélation de certains coefficients après cette première étape, et notamment la corrélation entre les composantes continues de chaque sous-support.

Un exemple de coefficient de corrélation pour la première étape est :

$$a_i = \frac{1}{\sqrt{M_i N_i}}$$

$$b_i = \sqrt{K}$$

K = nombre de points du support

Il faut alors définir l'ordre de lecture des coefficients en vue de quantification et codage. Les coefficients sont regroupés selon leur rang après la dernière transformation. On lit tous les coefficients de rang 1, ensuite tous les coefficients de rang 2, selon le schéma de la figure 7.

Le procédé a été testé avec la variante suivante qui a été schématisée dans la figure 8 :

- décomposition récursive en sous-supports rectangulaires de taille maximale,
- itération de la transformation sur les composantes continues avec les coefficients de normalisation donnés ci-dessus.

Ce test a montré que le procédé s'est révélé supérieur en termes de gain de codage théorique par rapport aux transformations rapides similaires.

Le procédé proposé peut être utilisé pour coder n'importe quel type de région.

En mode intra, les régions segmentées peuvent être issues d'une segmentation automatique pour un critère d'homogénéité donné, comme par exemple la faible variation en niveaux de gris.

En mode inter les zones à coder peuvent être les zones où la compensation de mouvement ne s'est pas avérée suffisante. Dans un codeur basé "objet" la compensation de mouvement est faite par région, et donc les zones où le signal prédit n'est pas assez proche du signal initial seront a fortiori de forme arbitraire.

**Revendications**

1. Procédé de transformation linéaire du signal image sur un support de forme et de taille arbitraire pour le codage de la texture de cette image et qui présente une adaptivité au support, ou on entend par support la géométrie de la région de l'image auquelle on s'intéresse, caractérisé en ce qu'il comporte les étapes suivantes :

   - décomposition du support en sous-supports de formes régulières (carré, rectangulaire, linéique),
   - application d'une transformation linéaire orthogonale sur chaque sous-support,

      - regroupement des coefficients issus de la première transformation en classes de coefficients selon un critère prédéterminé,
      - itération de la transformation sur les classes de coefficients formées;

   en ce qui l'étape de regroupement comporte une étape intermédiaire consistant à passer d'un espace à deux dimensions à une dimension représenté par des vecteurs de coefficients.

2. Procédé de transformation selon la revendication 1, caractérisé en ce que l'étape intermédiaire est réalisée en opérant une lecture des coefficients en zigzag.

3. Procédé de transformation selon la revendication 1, caractérisé en ce que l'étape de regroupement consiste à regrouper les coefficients représentant les composantes continues correspondant à chaque sous-support en un vecteur de taille égale au nombre de sous-supports.

4. Procédé de transformation selon la revendication 1 et la revendication 2, caractérisé en ce que l'étape de regroupement consiste à regrouper les coefficients de même rang défini par la lecture en zigzag.

5. Procédé de transformation selon la revendication 1, caractérisé en ce que l'étape de regroupement consiste à regrouper les coefficients qui sont proches en distance, une distance dans l'espace fréquentiel ayant été prédéfinie.

6. Procédé de transformation selon l'une quelconque des revendications précédentes, caractérisé en ce qu'il consiste en outre à effectuer une réorganisation finale des coefficients selon un ordre choisi.

7. Procédé de transformation selon la revendication 6, caractérisé en ce que l'ordre choisi est celui de leur rang après transformation.

8. Procédé de transformation selon l'une quelconque des revendications précédentes, caractérisé en ce que la transformation linéaire orthogonale appliquée aux sous-supports est une transformation en cosinus discrète.

9. Procédé de transformation selon l'une quelconque des revendications précédentes, caractérisé en ce que l'on opère la même transformation linéaire lors de l'itération que lors du traitement des sous-supports.

10. Procédé de transformation selon la revendications 9, caractérisé en ce que l'itération de la transformation est effectuée avec une matrice de transformation normalisée.

**Patentansprüche**

1. Lineartransformationsverfahren des Bildsignals auf einem Träger von arbiträrer Größe und Form für die Codierung der Struktur dieses Bildes, das eine Adaptionsfähigkeit an den Träger aufweist und wo man unter Träger die Geometrie des Bereichs des Bildes versteht, für den man sich interessiert,
**dadurch gekennzeichnet**,

daß es die folgenden Schritte umfaßt:

- Auflösung des Trägers in Unterträger mit gleich- bzw. regelmäßigen Formen (quadratisch, rechtwinklig, linienförmig),
- Anwendung einer rechtwinkligen linearen Transformation auf jeden Träger,
- Zusammenfassung der von der ersten Transformation stammenden Koeffizienten in Koeffizientenklassen nach einem festgelegten Kriterium,
- Iteration der Transformation bei den gebildeten Koeffizientenklassen,

und dadurch, daß der Zusammenfassungsschritt einen Zwischenschritt umfaßt, darin bestehend, aus einem Raum mit zwei Dimensionen zu einer Dimension überzugehen, dargestellt durch Koeffizientenvektoren.

2. Transformationsverfahren nach Anspruch 1, dadurch gekennzeichnet, daß der Zwischenschritt realisiert wird, indem man eine Zickzack-Lektüre der Operanten durchführt.

3. Transformationsverfahren nach Anspruch 1, dadurch gekennzeichnet, daß der Zusammenfassungsschritt darin besteht, die Koeffizienten, die die jedem Unterträger entsprechenden kontinuierlichen Komponenten darstellen, in einem Vektor gleich der Größe der Anzahl der Unterträger zusammenzufassen.

4. Transformationsverfahren nach Anspruch 1 und Anspruch 2, dadurch gekennzeichnet, daß der Zusammenfassungsschritt darin besteht, die Koeffizienten desselben Rangs, definiert durch die Zickzack-Lektüre, zusammenzufassen.

5. Transformationsverfahren nach Anspruch 1, dadurch gekennzeichnet, daß der Zusammenfassungsschritt darin besteht, die Koeffizienten zusammenzufassen, die einen geringen Abstand aufweisen, wobei ein Abstand im Frequenzraum festgelegt worden ist.

6. Transformationsverfahren nach einem der vorangehenden Ansprüche, dadurch gekennzeichnet, daß es außerdem darin besteht, eine endgültige Reorganisation der Koeffizienten nach einer gewählten Ordnung durchzuführen.

7. Transformationsverfahren nach Anspruch 6, dadurch gekennzeichnet, daß die gewählte Ordnung diejenige ihres Rangs nach der Transformation ist.

8. Transformationsverfahren nach einem der vorangehenden Ansprüche, dadurch gekennzeichnet, daß die auf die Unterträger angewandte rechtwinklige lineare Transformation eine diskrete Kosinustransformation ist.

9. Transformationsverfahren nach einem der vorangehenden Ansprüche, dadurch gekennzeichnet, daß man bei der Iteration dieselbe linare Transformation wie bei der Verarbeitung der Unterträger ausführt.

10. Transformationsverfahren nach Anspruch 9, dadurch gekennzeichnet, daß die Iteration der Transformation mit einer normalisierten Transformationsmatrix durchgeführt wird.

## Claims

1. A method of linear transform coding of the image signal on a base of any arbitrary shape and size in order to code the texture of this image and incorporating adaptation to the base, where base is intended to mean the geometry of the region of the image to be processed, characterised in that it incorporates the following steps:

- breaking the base down into sub-bases of regular shapes (squared, rectangular, by unit length),
- applying an orthogonal linear transform on each sub-base,
- grouping the coefficients obtained from the first transform into classes of coefficients in accordance with a predetermined criterion,
- iterating the transform on the classes of coefficients formed,

characterised in that the grouping step incorporates an intermediate step which consists in moving from a two-dimensional space into one dimension represented by coefficient vectors.

2. A method of transform coding as claimed in claim 1, characterised in that the intermediate step is performed by reading the coefficients in a zigzag pattern.

3. A method of transform coding as claimed in claim 1, characterised in that the grouping step consists in grouping the coefficients representing the continuous components corresponding to each sub-base in a size vector equal to the number of sub-bases.

4. A method of transform coding as claimed in claim 1 and claim 2, characterised in that the grouping step consists in grouping the coefficients of the same rank as defined by the zigzag reading operation.

5. A method of transform coding as claimed in claim 1, characterised in that the grouping step consists in grouping the coefficients which are close in terms of distance, a distance in the frequency space being predefined.

6. A method of transform coding as claimed in one of the preceding claims, characterised in that it also consists in finally reorganising the coefficients in accordance with a chosen order.

7. A method of transform coding as claimed in claim 6, characterised in that the chosen order is that of their rank after transform coding.

8. A method of transform coding as claimed in any one of the preceding claims, characterised in that the orthogonal linear transform applied to the sub-bases is a discrete cosine transform.

9. A method of transform coding as claimed in any one of the preceding claims, characterised in that the same linear transform is operated during iteration as during processing of the sub-bases.

10. A method of transform coding as claimed in claim 9, characterised in that the transform is iterated with a normalised transform matrix.

# FIG_1

EP 0 825 556 B1

Forme

Texture

Codage
forme

Décodage
forme

Forme

Texture
reconstruite

Matrice de
transformation

Quantif+
codage
entropique

Décodage
entropique+
quantif. inv

Matrice de
transformation
inverse

CODAGE

TRANSMISSION

DECODAGE

Décomposition en sous-supports

T sur chaque sous-support

Passage 2D→1D

Regroupement des coefficients

T sur les ensembles de coefficients

Réarrangement des coefficients dans le rectangle

$T_{2\times2}$

$I_{10\times10}$

FIG_2

EP 0 825 556 B1

Support

Rectangle circonscrit

S3

S1

S2

S4

Décomposition itérative en
rectangles de surface
maximale

FIG_3

1 → 2
3 → 4

⟹

| 1 | 2 | 3 | 4 |

FIG_4

1 → 2
3 → 4

1  3
2  4

FIG_5

# FIG_6A

# FIG_6B

# FIG_6C

rang1    rang3

$| D_0^0 | D_1^0 | D_2^0 | D_3^0 | D_4^0 | D_5^0 | D_6^0 | D_7^0 |$

$| D_0^1 | D_1^1 | D_2^1 | D_3^1 | D_4^1 | D_5^1 |$

$| D_0^3 | D_1^3 | D_2^3 | D_3^3 |$

$| D_0^4 | D_1^4 |$

rang0    rang2

## FIG_7

Coefficients issus de l'itération
de T sur les CC

Décomposition

Lecture 2D →1D
après transformation

$\begin{array}{|c|c|c|c|} \hline C_{00}^{S1} & C_{01}^{S1} & C_{02}^{S1} & C_{03}^{S1} \\ \hline C_{10}^{S1} & C_{10}^{S1} & C_{10}^{S1} & C_{10}^{S1} \\ \hline \end{array}$

$\begin{array}{|c|c|} \hline C_{00}^{S2} & C_{01}^{S2} \\ \hline C_{10}^{S2} & C_{12}^{S2} \\ \hline \end{array}$

Regroupement CC et itération
transformation

$| C_{00}^{S1} | C_{01}^{S1} | C_{10}^{S1} | C_{11}^{S1} | C_{02}^{S1} | C_{03}^{S1} | C_{12}^{S1} | C_{13}^{S1} |$

T

$| C_{00}^{S2} | C_{01}^{S2} | C_{10}^{S2} | C_{12}^{S2} |$

Recopie (T=Id)

Ordre final de lecture
des coefficients en vue du codage

$| D_0^0 | D_1^0 |$

$| D_1^1 | D_2^1 | D_3^1 | D_4^1 | D_5^1 | D_6^1 | D_7^1 |$

$| D_1^2 | D_2^2 | D_3^2 |$

## FIG_8

EP 0 825 556 B1

FOND

PERSONNAGE

# FIG_9A

☐ BLOCS CODES
PAR PROCEDE
PROPOSE

# FIG_9B